# EUROPEAN PATENT SPECIFICATION

(11) **EP 3 220 029 B1**
(45) Date of publication and mention of the grant of the patent: **09.01.2019**
(21) Application number: 17160935.7
(22) Date of filing: 14.03.2017
(51) Int. Cl.: F16K 31/06, F16K 1/44

(54) **VALVE**
VENTIL
VANNE

(30) Priority: 15.03.2016 IT UA20161690
(43) Date of publication of application: 20.09.2017
(73) Proprietor: MADAS S.r.l., 37048 San Pietro Di Legnago - Verona (IT)
(72) Inventor: Marangoni, Luigi, 37040 TERRAZZO (VR) (IT)
(74) Representative: Fisauli, Beatrice A. M.

(56) References cited:
- DE-A1- 10 306 001
- DE-A1- 19 525 384
- DE-B3-102005 032 606

## Description

The present invention refers, in general, to a control and adjustment device for controlling and adjusting the passage of gas. More particularly, the present invention refers to a device which is adapted to allow or prevent the passage of gas feeding one or more users and which is provided with a pressure regulator, adapted to keep the outlet gas pressure constant.

Devices for controlling the passage of a gas, namely opening or closing the passage, are known. Documents DE 195 25 384, DE 10 2005 032606 and DE 103 06 001 disclose devices for controlling the passage of a gas.

In addition to this function, such devices can also act as a filter, as well as keep the outlet gas pressure constant, even at an unstable inlet gas pressure.

Such known type devices usually have two electrovalves for the control of two different shutters.

Consequently, the presence of more electrovalves makes the device more complex and more expensive.

An aim of the invention is to remove the aforesaid drawbacks and still others, through the realization of an opening or closing device which is constructively simple.

Another aim of the invention is to provide an opening or closing device for the passage of gas at a reduced construction cost.

These and other aims are achieved according to the invention through a control and adjustment device for controlling and adjusting the passage of gas feeding one or more users, comprising an electromagnet and a central body.
The electromagnet comprises a coil and a core mobile relative to the coil. The central body is provided with an inlet conduit for the gas, an intermediate conduit communicating through a first through opening with the inlet conduit, and an outlet conduit for the gas, communicating through a second through opening with the intermediate conduit.

In particular, the device according to the invention is characterized by the fact that the mobile core comprises a liner and an inner body.

The liner abuts on the edges of the first opening through first elastic means and is adapted to close the first opening when the electromagnet is not electrically activated.

The inner body is disposed inside of the liner and a stem with a free end is fixed to the inner body.

Besides, the device comprises a rod which includes, at an upper end, an annular head and in which a central conduit is formed which is open at the ends of the rod so as to form an upper hole and a lower hole.

The free end of the stem abuts on an upper portion of the rod through second elastic means so as to close the upper hole and keep the annular head abutting on the edges of the second opening so that the annular head closes the second opening.

Besides, the device comprises a lower body in which a first chamber is formed which is divided by a first diaphragm into an upper portion and a lower portion, the rod being fixed to the first diaphragm.

Since the lower hole is communicating with the lower portion of the first chamber, when the coil is electrically powered, the inner body of the core and the liner are lifted freeing the passage of the first opening and the passage of the upper hole of the rod, respectively, and the gas passes from the inlet conduit to the intermediate conduit and to the inside of the central conduit reaching the lower portion of the first chamber.

Besides, the gas under pressure in the lower portion of the first chamber moves the first diaphragm upward so as to move also the rod and the relative annular head upward freeing also the passage of the second opening and passing the gas from the intermediate conduit to the outlet conduit.

Through this conformation, it is possible with a single coil, namely with a single electromagnet, to control the opening and closing of two separate passage openings.

Advantageously, a second chamber may be formed in the lower body and is communicating through an orifice with the lower portion of the first chamber and is divided by a second diaphragm into an upper portion and a lower portion, the lower end of the rod being fixed to the second diaphragm.

Moreover, the lower portion of the second chamber is communicating with the external environment in order to operate the device even at very low gas pressures.

Also for this purpose, the lower portion of the second chamber receives a control spring that acts on the second diaphragm.

In order to keep constant or, in any case, stable the pressure of the gas exiting from the device, the upper portion of the second chamber may be connected through a re-entry conduit to the outlet conduit.

In particular, the re-entry conduit may receive a movable shutter adapted to create a passage of variable opening in the re-entry conduit. When the passage of variable opening is smaller than the orifice, the gas pressure increases inside the upper portion of the second chamber and pushes the second diaphragm downward. Consequently, the rod and the relative annular head are brought to the closing of the second opening so that also the gas pressure in the first chamber decreases.

Advantageously, the position of the shutter in the re-entry conduit may be adjustable by an external user, so that the external user is able to vary the outlet gas pressure.

More particularly, the shutter may be fixed to a working diaphragm received into a chamber formed in a cup-shaped portion, said working diaphragm being placed under pressure by an adjusting spring, the position of the working diaphragm and consequently the position of the shutter being adjustable by an external user.

Since the control and adjustment device according to the invention may act also as a filter, a filter may be received in the inlet conduit or in the intermediate conduit or in the outlet conduit or in two or in all three of these conduits.

In order to increase the safety level of the whole device, a respective safety diaphragm may be associated to the second diaphragm and/or to the working diaphragm, which safety diaphragm is adapted to act in the case of failure of the second diaphragm or the working diaphragm or both diaphragms.

Further features and details of the invention will be better understood from the following specification which is supplied by way of a non-limiting example, as well as from the accompanying drawing, wherein:

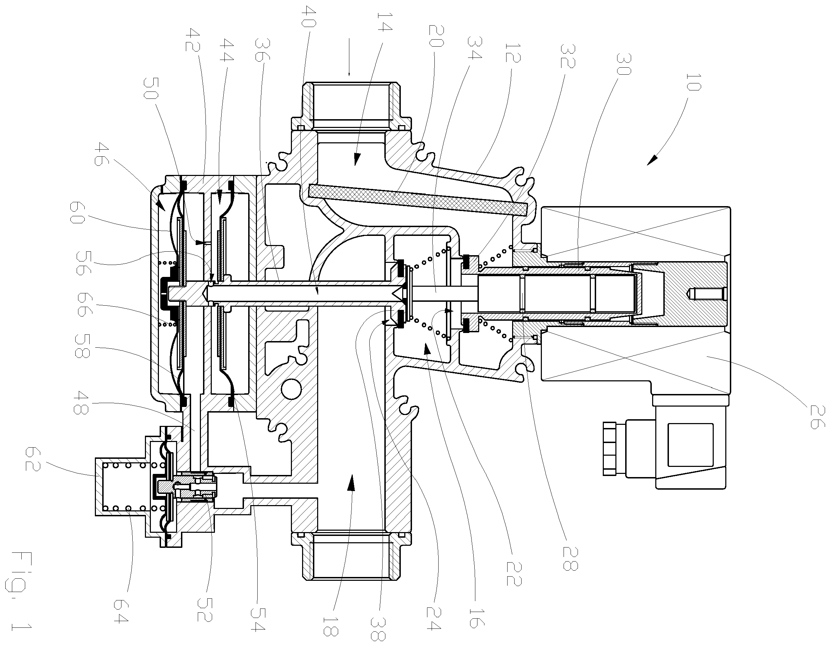

Figure 1 is a side view in section of a control and adjustment device adapted to allow or prevent the passage of a gas feeding one or more users.

With reference to the annexed drawing, number 10 denotes a control and adjustment device for controlling and adjusting the passage of a gas, comprising a gas pressure regulator in order to make the parameter of pressure stable.

The device 10 centrally comprises a central body 12 in which an inlet conduit 14, an intermediate conduit 16 and an outlet conduit 18 are formed.

The inlet conduit 14 is provided with a filter 20 and communicates with the intermediate conduit 16 through a first through opening 22, while the intermediate conduit 16 communicates with the outlet conduit 18 through a second through opening 24.

Superiorly to the central body 12, an electric coil 26 is fixed in which a mobile core 28 can move. The outside of the mobile core 28 is provided with a liner 30 which has an annular enlarged end 32 acting as a shutter for the first through opening 22.

A stem 34 is fixed to the mobile core 28. The tip of the stem 34 abuts on a rod 36. In particular, a central conduit 40 is formed in the rod 36 and is closable at the top by the tip of the stem 34.

Besides, the rod 36 comprises an annular head 38 acting as a shutter for the second through opening 24.

Both the annular end 32 of the liner 30 and the annular head 38 are kept in closing of the respective passages by the action of respective contrast springs.

A lower body 42 is arranged below the central body 12. A first chamber 44 and a second chamber 46 are formed in the lower body 42 and communicate with each other through an orifice 50, as well as a reentry conduit 48 interested by the action of a shutter 52.

The orifice 50 has a passage which is smaller than all the passages that, during the normal operation of the device 10, are arranged downstream with respect to the same orifice 50.

A first diaphragm 54 is received in the first chamber 44 and divides the first chamber 44 into two parts. The first diaphragm 54 is rigidly fixed to the end of the rod 36 the central conduit 40 of which ends with two side holes 56 which, regardless of the position of the rod 36, communicate with the lower portion of the first chamber 44.

A second diaphragm 58 and a safety diaphragm 60 are arranged in the second chamber 46, to which diaphragms the end of the rod 36 is fixed and which diaphragms divide the second chamber 46 into two portions.

The upper portion of the second chamber 46 communicates with the re-entry 48 which is connected to the outlet conduit 18 and which can be obstructed by the shutter 52.

In particular, the position of the shutter 52 can be changed by rotating a cup-shaped portion 62 which receives an adjusting spring 64.

The adjusting spring 64 acts on a pilot working diaphragm and a safety diaphragm, which diaphragms in turn act on the shutter 52.

The displacement of the shutter 52 involves that the re-entry conduit 48 is more or less interested by the shutting action of the shutter 52.

The working of the device 10 is described below.

When the coil 26 is electrically fed, the liner 30 is moved upward, which causes that the annular end 32 frees the first opening 22 to allow the passage of gas from the inlet conduit 14 to the intermediate conduit 16.

At the same time, also the mobile core 28 is attracted upward so that also the stem 34 is displaced. The free end of the stem 34 rises and let the gas passage free from the intermediate conduit 16 to the central conduit 40 of the rod 36.

Through the central conduit 40 and the side holes 56, the gas enters the lower portion of the first chamber 44 and here, according to the gas pressure, can push the first diaphragm 54 upward. The first diaphragm 54 in turn lifts the rod 36.

Consequently, the annular head 38 of the rod 36 rises and lets free the passage of the second opening 24 allowing the gas to reach the outlet conduit 18.

From the lower portion of the first chamber 44, the gas at its relative pressure enters the upper portion of the second chamber 46 through the orifice 50.

When the outlet gas pressure increases, the shutter 52 is pushed down and goes to throttle the passage from the reentry conduit 48 to the outlet conduit 18.

When the passage through the shutter 52 is smaller than the orifice 50, the gas pressure in the upper portion of the second chamber 46 increases and acts on the second diaphragm 58 so as to push it down.

The second diaphragm 58 in turn pushes the rod 36 down, and consequently the annular head 38 goes to close the second opening 24, which involves also a reduction of the gas pressure in the first chamber 44.

In these equilibrium conditions, every change of pressure in the outlet conduit 18 involves a self-regulation of the gas passage through the shutter 52 and the reentry conduit 48.

The lower portion of the second chamber 46 is connected through a small hole to the external environment and is provided with a control spring 66 which serves to cancel the effect of the inlet pressure on the annular head 38 when operating with very low pressures.

## Claims

1. Control and adjustment device (10) for controlling and adjusting the passage of gas comprising:
- an electromagnet with a coil (26) and a mobile core (28, 30) movable relative to the coil (26);
- a central body (12) in which there are formed:
o an inlet conduit (14) for the gas,
o an intermediate conduit (16) communicating through a first through opening (22) with the inlet conduit (14);
o an outlet conduit (18) for the gas, communicating through a second through opening (24) with the intermediate conduit (16);
**characterized by the fact that** the mobile core comprises:
- a liner (30) abutting on the edges of the first opening (22) through first elastic means and adapted to close the first opening (22) when the electromagnet is not electrically activated;
- an inner body (28) which is disposed inside of the liner (30) and to which a stem (34) with a free end is fixed;
**in which** a rod (36) is comprised and includes, at an upper end, an annular head (38) and in which a central conduit (40) is formed which is open from the upper end to a lower end of the rod (36) so as to form an upper hole and a lower hole (56), the lower end of the stem (34) being abutting on an upper portion of the rod (36) through second elastic means so as to close the upper hole and keep the annular head (38) abutting on the edges of the second opening (24) so that the annular head (38) itself closes the second opening (24);
**in which** a lower body (42) is comprised in which a first chamber (44) is formed which is divided by a first diaphragm (54) into an upper portion and a lower portion, the rod (36) being fixed to the first diaphragm (54), the lower hole being communicating with the lower portion of the first chamber (44),
so that, when the coil (26) is electrically powered, the inner body (28) of the core and the liner (30) are lifted freeing the passage of the first opening (22) and the passage of the upper hole of the rod (36), respectively, and the gas passes from the inlet conduit (14) to the intermediate conduit (16) and to the inside of the central conduit (40) of the rod (36) reaching the lower portion of the first chamber (44) so that the gas under pressure in the lower portion of the first chamber (44) moves the first diaphragm (54) upward so as to move also the rod (36) and the relative annular head (38) upward freeing also the passage of the second opening (24) and passing the gas from the intermediate conduit (16) to the outlet conduit (18).

2. Control and adjustment device (10) according to the preceding claim, wherein a second chamber (46) is formed in the lower body (42) and is divided by a second diaphragm (58) into an upper portion and a lower portion, the lower end of the rod (36) being fixed to the second diaphragm (58), the upper portion of the second chamber (46) being communicating through an orifice (50) with the lower portion of the first chamber (44).

3. Control and adjustment device (10) according to the preceding claim, wherein the lower portion of the second chamber (46) is communicating with the external environment.

4. Control and adjustment device (10) according to the preceding claim, wherein the lower portion of the second chamber (46) receives a control spring (66) that acts on the second diaphragm (58).

5. Control and adjustment device (10) according to one of claims 2 to 4, wherein the upper portion of the second chamber (46) is connected through a re-entry conduit (48) to the outlet conduit (18).

6. Control and adjustment device (10) according to the preceding claim, wherein the re-entry conduit (48) receives a movable shutter (52) adapted to create a passage of variable opening in the re-entry conduit (48).

7. Control and adjustment device (10) according to the preceding claim, wherein the position of the shutter (52) in the re-entry conduit (48) is adjustable by an external user.

8. Control and adjustment device (10) according to claim 6 or 7, wherein the shutter (52) is fixed to a working diaphragm received into a chamber formed in a cup-shaped portion (62), said working diaphragm being placed under pressure by an adjusting spring (64), the position of the working diaphragm and consequently the position of the shutter being adjustable by an external user.

9. Control and adjustment device (10) according to one of the preceding claims, wherein a filter (20) is received in at least one of the inlet conduit (14), the intermediate conduit (16) and the outlet conduit (18).

10. Control and adjustment device (10) according to one of claims 2 to 9, wherein a respective safety diaphragm is associated to the second diaphragm (58) and/or to the working diaphragm.

## Patentansprüche

1. Steuer- und Regelvorrichtung (10) für den Gasdurchtritt, umfassend:
- einen Elektromagneten mit einer Spule (26) und einem Kern (28, 30), der in Bezug auf die Spule (26) beweglich ist;
- einen Zentralkörper (12), in dem erhalten werden:
* eine Einlassleitung (14) des Gases,
* eine Zwischenleitung (16), die mit der Einlassleitung (14) durch eine erste durchgehende Öffnung (22) kommuniziert;
* eine Auslassleitung (18) des Gases, wobei das Gas mit der Zwischenleitung (16) durch eine zweite durchgehende Durchgangsöffnung (24) kommuniziert;
**dadurch gekennzeichnet, dass** der bewegliche Kern umfasst:
- einen Mantel (30), der gegen die ersten elastischen Mittel an den Rändern der ersten Öffnung (22) angeordnet ist und die erste Öffnung (22) schließen kann, wenn der Elektromagnet nicht elektrisch aktiviert ist;
- einen inneren Körper (28), der innerhalb des Mantels (30) angeordnet ist und an dem ein Schaft (34) mit einem freien Ende befestigt ist;
**wobei** eine Stange (36) umfasst an einem oberen Ende einen ringförmigen Kopf (38) und wobei eine zentrale Leitung (40) erhalten wird, die vom oberen Ende zu einem unteren Ende der Stange (36) offen ist, um ein oberes Loch und ein unteres Loch (56) zu erhalten, wobei das untere Ende des Schaftes (34) gegen zweite elastische Mittel an einem oberen Abschnitt der Stange (36) in Anlage gebracht wird, um das obere Loch zu schließen und den ringförmigen Kopf (38) in Anlage an den Rändern der zweiten Öffnung (24) derart zu halten, dass derselbe ringförmige Kopf (38) die zweite Öffnung (24) verschließt;
**wobei** ein unterer Körper (42) umfasst ist, in dem eine erste Kammer (44) erhalten wird, die in einen oberen Abschnitt und einen unteren Abschnitt von einer ersten Membran (54) unterteilt ist, wobei der Schaft (36) an der ersten Membran (54) befestigt ist, wobei das untere Loch, das mit dem unteren Abschnitt der ersten Kammer (44) derart in Verbindung steht,
dass, wenn die Spule (26) elektrisch angetrieben wird, der innere Körper (28) des Kerns und der Mantel (30) angehoben werden, wodurch jeweils der Durchgang der ersten Öffnung (22) und des oberen Lochs des Schaftes (36) freigegeben werden, und das Gas von der Einlassleitung (14) zur Zwischenleitung (16) und innerhalb des Zentralleitung (40) des Schaftes (36) bis zu dem unteren Abschnitt der ersten Kammer (44) derart verlagert wird, dass das unter Druck stehendes Gas im unteren Abschnitt der ersten Kammer (44) die erste Membran (54) nach oben schiebt, um auch den Schaft (36) und den entsprechenden ringförmigen Kopf (38) nach oben zu bewegen, wodurch auch der Durchtritt der zweiten Öffnung (24) freigegeben wird und das Gases aus der Zwischenleitung (16) zur Auslassleitung (18) bewegt werden kann.

2. Steuer- und Regelvorrichtung (10) nach dem vorhergehenden Anspruch, wobei im unteren Körper (42) eine zweite Kammer (46) ausgebildet ist, die in einen oberen Abschnitt und einen unteren Abschnitt durch eine zweite Membran (58) unterteilt ist, wobei da unteres Ende des Schaftes (36) an den zweiten Membran (58) fixiert ist, wobei der obere Abschnitt der zweiten Kammer (46) mit dem unteren Abschnitt der ersten Kammer (44) durch eine Bohrung (50) kommuniziert.

3. Steuer- und Regelvorrichtung (10) nach dem vorhergehenden Anspruch, wobei der untere Abschnitt der zweiten Kammer (46) mit der äußeren Umgebung kommuniziert.

4. Steuer- und Regeleinrichtung (10) nach dem vorhergehenden Anspruch, wobei der untere Abschnitt der zweiten Kammer (46) eine Kontrollfeder (66) aufnimmt, die auf die zweite Membran (58) wirkt.

5. Steuer- und Regelvorrichtung (10) nach einem der Ansprüche 2 bis 4, wobei der obere Abschnitt der zweiten Kammer (46) über eine Rückführungsleitung (48) mit der Auslassleitung (18) verbunden ist.

6. Steuer- und Regelvorrichtung (10) nach dem vorhergehenden Anspruch, wobei die Rückführungsleitung (48) einen beweglichen Verschluss (52) aufnimmt, der einen variablen Öffnungsdurchgang im Rückführungsleitung (48) erzeugen kann.

7. Steuer- und Regelvorrichtung (10) nach dem vorhergehenden Anspruch, wobei die Lage des Verschlusses (52) in dem Rückführungsleitung (48) durch einen äußeren Benutzer einstellbar ist.

8. Steuer- und Regelvorrichtung (10) nach Anspruch 6 oder 7, wobei der Verschluss (52) an einer Betätigungsmembran befestigt ist, die in einer Kammer untergebracht ist, die in einem Becherteil (62) ausgebildet ist, wobei die genannte Betätigungsmembran durch eine Einstellfeder (64) unter Druck gesetzt wird, wobei die Lage der Betätigungsmembran und damit des Verschlusses durch einen äußeren Benutzer einstellbar ist.

9. Steuer und Regelvorrichtung (10) nach einem der vorhergehenden Ansprüche, wobei in mindestens einer der Einlassleitungen (14), der Zwischenleitung (16) und der Auslassleitung (18) ein Filter (20) aufgenommen wird.

10. Steuer- und Regelvorrichtung (10) nach einem der Ansprüche 2 bis 9, wobei der zweiten Membran (58) und/oder der Betätigungsmembran eine entsprechende Sicherheitsmembran zugeordnet ist.

## Revendications

1. Dispositif de commande et de régulation (10) pour le passage de gaz comprenant:
- un électroaimant avec une bobine (26) et un noyau (28, 30) mobile par rapport à la bobine (26) ;
- un corps central (12) dans lequel sont obtenus:
* un conduit d'admission (14) du gaz,
* un conduit intermédiaire (16) communiquant avec le conduit d'entrée (14) par une première ouverture (22)
* un conduit de sortie (18) du gaz communiquant avec le conduit intermédiaire (16) à travers une deuxième ouverture (24);
**caractérisé en ce que** le noyau mobile comprend:
- une chemise (30) placée contre les bords de la première ouverture (22) par des premiers moyens élastiques et adaptée pour fermer la première ouverture (22) lorsque l'électroaimant n'est pas activé électriquement;
- un corps interne (28) disposé à l'intérieur de la chemise (30) et auquel une tige (34) est fixée avec une extrémité libre;
**dans lequel** une tige (36) est composée comprenant à une extrémité supérieure une tête annulaire (38) et dans lequel on obtient un conduit central (40) ouvert de l'extrémité supérieure à une extrémité inférieure de la tige (36) afin d'obtenir un trou supérieur et un trou inférieur (56), l'extrémité inférieure de la tige (34) étant en butée par un deuxième moyen élastique sur une partie supérieure de la tige (36) de manière à fermer le trou supérieur et à maintenir la tête annulaire (38) en butée contre les bords de la deuxième ouverture (24) de sorte que la même tête annulaire (38) ferme la deuxième ouverture (24);
**dans lequel** un corps inférieur (42) comprend une première chambre (44) divisée en une partie supérieure et une partie inférieure d'une première membrane (54), la tige (36) étant fixée à la première membrane (54), le trou inférieur communiquant avec la partie inférieure de la première chambre (44),
de sorte que, lorsque la bobine (26) est alimentée électriquement, le corps interne (28) du noyau et la chemise (30) sont surélevés, libérant respectivement le passage de la première ouverture (22) et du trou supérieur de la tige (36), et le gaz passe du conduit d'entrée (14) au conduit intermédiaire (16) et à l'intérieur du conduit central (40) de la tige (36) jusqu'à la partie inférieure de la première chambre (44), de sorte que le gaz sous pression dans la partie inférieure de la première chambre (44) déplace la première membrane (54) vers le haut, de manière à déplacer également la tige (36) et la tête annulaire relative (38) vers le haut, libérant ainsi également le passage de la deuxième ouverture (24) et laissant passer le gaz du conduit intermédiaire (16) vers le conduit de sortie (18).

2. Dispositif de commande et de régulation (10) selon la revendication précédente, dans lequel, dans le corps inférieur (42) est formée une deuxième chambre (46) divisée en une partie supérieure et une partie inférieure par une deuxième membrane (58), l'extrémité inférieure de la tige (36) étant fixée à la deuxième membrane (58), la partie supérieure de la deuxième chambre (46) communiquant avec la partie inférieure de la première chambre (44) par un orifice (50).

3. Dispositif de commande et de régulation (10) selon la revendication précédente, dans lequel la partie inférieure de la deuxième chambre (46) communique avec l'environnement extérieur.

4. Dispositif de commande et de régulation (10) selon la revendication précédente, dans lequel la partie inférieure de la deuxième chambre (46) loge un ressort de commande (66) qui agit sur la deuxième membrane (58).

5. Dispositif de commande et de régulation (10) selon l'une des revendications 2 à 4, dans lequel la partie supérieure de la deuxième chambre (46) est reliée au conduit de sortie (18) par un conduit de rentrée (48).

6. Dispositif de commande et de régulation (10) selon la revendication précédente, dans lequel le conduit de rentrée (48) loge un obturateur mobile (52) capable de créer un passage à ouverture variable dans le conduit de rentrée (48) .

7. Dispositif de commande et de régulation (10) selon la revendication précédente, dans lequel la position de l'obturateur (52) dans le conduit de rentrée (48) est réglable par un utilisateur externe.

8. Dispositif de commande et de régulation (10) selon la revendication 6 ou 7, dans lequel l'obturateur (52) est fixé à une membrane d'actionnement logée dans une chambre formée dans une partie en forme de tasse (62), ladite membrane d'actionnement étant mise sous pression par un ressort de régulation (64), la position de la membrane de commande et donc de l'obturateur étant réglables par un utilisateur externe.

9. Dispositif de commande et de régulation (10) selon l'une des revendications précédentes, dans lequel dans au moins l'un des conduits d'entrée (14), du conduit intermédiaire (16) et du conduit de sortie (18) est logé un filtre (20).

10. Dispositif de commande et de régulation (10) selon l'une quelconque des revendications 2 à 9, dans lequel à la deuxième membrane et/ou à la deuxième membrane de fonctionnement (58) est associée une respective membrane de sécurité.
